# EUROPÄISCHE PATENTSCHRIFT

(11) **EP 0 735 108 B1**
(45) Veröffentlichungstag und Bekanntmachung des Hinweises auf die Patenterteilung: **26.05.1999**
(21) Anmeldenummer: 96104564.8
(22) Anmeldetag: 22.03.1996
(51) Int. Cl.: C09B 62/507, C09B 62/006

(54) **Reaktive Azofarbstoffe mit einer Kupplungskomponente aus der Reihe der Aminonaphtalinsulfonsäuren**
Reactive azo dyes with an aminonaphthalenesulfonic acid as coupling component
Colorants azoiques réactifs ayant un copulant du type acide aminonaphtalénesulfonique

(30) Priorität: 30.03.1995 DE 19511691
(43) Veröffentlichungstag der Anmeldung: 02.10.1996
(73) Patentinhaber: BASF AKTIENGESELLSCHAFT, 67056 Ludwigshafen (DE)
(72) Erfinder: Patsch, Manfred, Dr., 67157 Wachenheim (DE); Kilburg, Heike, Dr., 67346 Speyer (DE); Zamponi, Andrea, Dr., 69124 Heidelberg (DE)

(56) Entgegenhaltungen:
- EP-A- 0 071 168
- EP-A- 0 637 615
- FR-A- 2 164 784
- FR-A- 2 193 856
- FR-A- 2 242 377
- FR-A- 2 248 301
- FR-A- 2 393 834
- US-A- 4 036 825

## Beschreibung

Die vorliegende Erfindung betrifft neue Reaktivfarbstoffe der Formel I 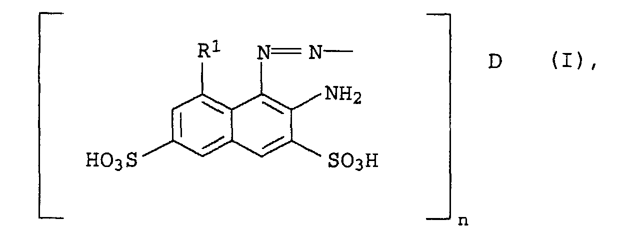 in der
- n: 1 oder 2,
- R¹: Wasserstoff oder Hydroxy und
- D: , wenn n 1 ist, einen Rest der Formel 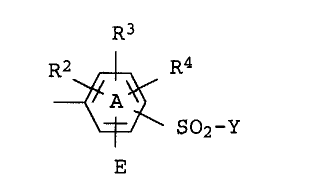 oder, wenn n 2 ist, einen Rest der Formel 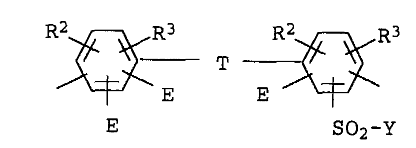 bedeuten, worin der Ring A benzoanelliert sein kann, R², R³ und R⁴ unabhängig voneinander jeweils für Wasserstoff, Halogen oder Hydroxysulfonyl, E für Wasserstoff, einen heterocyclischen Ankerrest oder einen Ankerrest aus der aliphatischen Reihe, Y für Vinyl oder einen Rest der Formel C₂H₄-Q, wobei Q die Bedeutung einer unter alkalischen Reaktionsbedingungen abspaltbaren Gruppe besitzt, und T für ein Brückenglied stehen, mit der Maßgabe, daß wenn n 1, R¹ Hydroxy und R², R³ und R⁴ jeweils Wasserstoff bedeuten, E weder Wasserstoff noch ein Rest der Formel SO₂-Y, W¹-SO₂-Y oder CONX-W¹-SO₂-Y ist, worin Y jeweils die obengenannte Bedeutung besitzt und W¹ jeweils für C₁-C₄-Alkylen und X für Wasserstoff oder C₁-C₄-Alkyl stehen und mit der Maßgabe, daß wenn n 1 und R¹ Wasserstoff ist, E nicht Wasserstoff bedeutet,
sowie ihre Verwendung zum Färben oder Bedrucken von Hydroxygruppen oder Stickstoffatome aufweisenden organischen Substraten.

Aus der EP-A-637 615 sind Farbstoffe bekannt, die ein ähnliches Gerüst wie die der Formel I (n = 1, R¹ = Hydroxy) aufweisen. Die dort beschriebenen Farbstoffe unterscheiden sich jedoch durch das Substitutionsmuster in der Diazokomponente.

Monoazofarbstoffe mit 2-Aminonaphthalindisulfonsäure als Kupplungskomponente und einer substituierten Diazokomponente mit einem faserreaktiven Rest sind der FR-A-2 242 377, FR-A-2 193 856, FR-A-2 164 784, FR-A-2 248 301 und der US-A-4 036 825 zu entnehmen.

Die ältere deutsche Patentanmeldung P 44 34 989.0 hat u.a. Reaktivfarbstoffe mit einer Kupplungskomponente aus der Reihe der 3-Hydroxysulfonylnaphthaline, die in Ringposition 7 eine substituierte Aminogruppe aufweisen und zusätzlich über eine Hydroxy- und Sulfonsäuregruppe verfügen können, zum Gegenstand.

Aufgabe der vorliegenden Erfindung war es, neue Reaktivfarbstoffe, die sich von Phenyl- oder Naphthalinazonaphthalinfarbstoffen ableiten, bereitzustellen. Die neuen Farbstoffe sollten sich durch ein vorteilhaftes anwendungstechnisches Eigenschaftsprofil auszeichnen.

Demgemäß wurden die eingangs näher bezeichneten Reaktivfarbstoffe der Formel I gefunden.

Die neuen Reaktivfarbstoffe der Formel I sind jeweils in Form der freien Säure angegeben. Selbstverständlich werden auch deren Salze von den Patentansprüchen umfaßt.

Geeignete Kationen leiten sich von Metall- oder Ammoniumionen ab. Metallionen sind insbesondere die Lithium-, Natrium- oder Kaliumionen. Unter Ammoniumionen im erfindungsgemäßen Sinne sind unsubstituierte oder substituierte Ammoniumkationen zu verstehen. Substituierte Ammoniumkationen sind z.B. Monoalkyl-, Dialkyl-, Trialkyl-, Tetraalkyl- oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium- oder Piperaziniumkationen oder deren N-monoalkyl- oder N,N-dialkylsubstituierte Produkte. Unter Alkyl ist dabei im allgemeinen geradkettiges oder verzweigtes C₁-C₂₀-Alkyl zu verstehen, das durch Hydroxylgruppen substituiert und/oder durch Sauerstoffatome in Etherfunktion unterbrochen sein kann.

Alle in der vorliegenden Anmeldung auftretenden Alkyl- und Alkylenreste können sowohl geradkettig als auch verzweigt sein.

Wenn in der vorliegenden Anmeldung substituierte Alkylgruppen auftreten, so weisen sie in der Regel 1 oder 2 Substituenten auf.

Wenn in der vorliegenden Anmeldung substituierte Phenylengruppen auftreten, so können, sofern nicht anderes vermerkt, z.B. C₁-C₄-Alkyl, C₁-C₄-Alkoxy, Halogen, Hydroxysulfonyl, Sulfamoyl oder C₁-C₄-Mono- oder Dialkylsulfamoyl als Substituenten in Betracht kommen. Sie weisen dann in der Regel 1 bis 3, vorzugsweise 1 oder 2 Substituenten auf.

Der Rest Q steht für eine unter alkalischen Reaktionsbedingungen abspaltbare Gruppe. Solche Gruppen sind z.B. Chlor, Brom, C₁-C₄-Alkylsulfonyl, Phenylsulfonyl, OSO₃H, SSO₃H, OP(O)(OH)₂, C₁-C₄-Alkylsulfonyloxy, gegebenenfalls substituiertes Phenylsulfonyloxy, C₁-C₄-Alkanoyloxy, C₁-C₄-Dialkylamino oder ein Rest der Formel 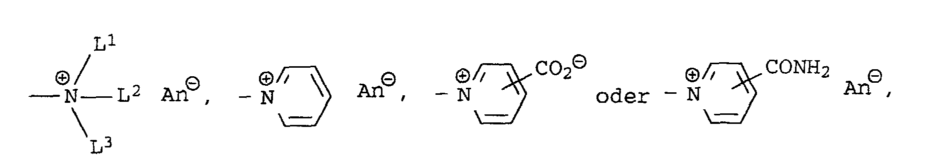 wobei L¹, L² und L³ unabhängig voneinander jeweils die Bedeutung von C₁-C₄-Alkyl oder Benzyl und An^{⊖} jeweils die Bedeutung eines Äquivalents eines Anions besitzen. Als Anionen können dabei z.B. Fluorid, Chlorid, Bromid, Iodid, Mono-, Di- oder Trichloracetat, Methansulfonat, Benzolsulfonat oder 2- oder 4-Methylbenzolsulfonat in Betracht kommen.

Die Reste E können innerhalb eines Moleküls gleich oder verschieden voneinander sein. Ankerreste E sind solche, die mit den Hydroxygruppen oder Stickstoffatome enthaltenden Gruppen der zu behandelnden Substrate substitutiv oder additiv reagieren. Dabei reagiert der C₂H₄-Q-Rest unter den alkalischen Reaktionsbedingungen zum Vinylrest.

Daß der Ankerrest mit den betreffenden Gruppen in den Substraten, z.B. mit den Hydroxygruppen der Cellulose, substitutiv reagiert, bedeutet, daß die Austrittsgruppen oder -atome (z.B. Fluor oder Chlor) im Ankerrest durch die Hydroxygruppen der Cellulose gemäß folgendem Schema substituiert werden:

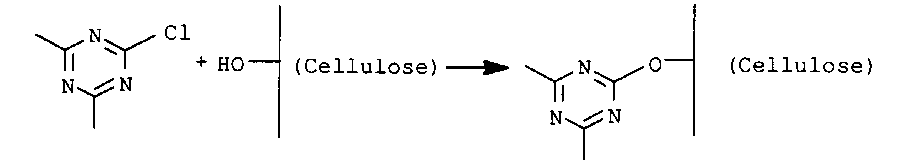

Daß der Ankerrest mit betreffenden Gruppen in den Substraten, z.B. mit Hydroxygruppen der Cellulose, additiv reagiert, bedeutet, daß die Hydroxygruppen der Cellulose gemäß folgendem Schema an den Ankerrest addiert werden:

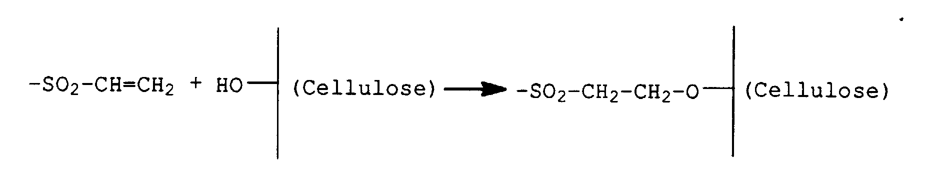

Heterocyclische Ankerreste E sind z.B. halogensubstituierte Reste von 1,3,5-Triazin, Chinoxalin, Phthalazin, Pyrimidin oder Pyridazin, oder der 2-Alkylsulfonylbenzthiazolrest.

Beispielhaft seien folgende heterocyclische Reste genannt: 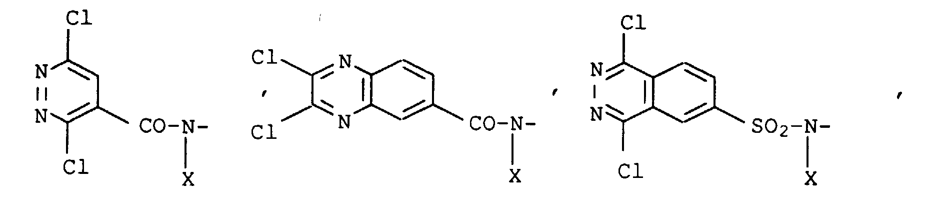 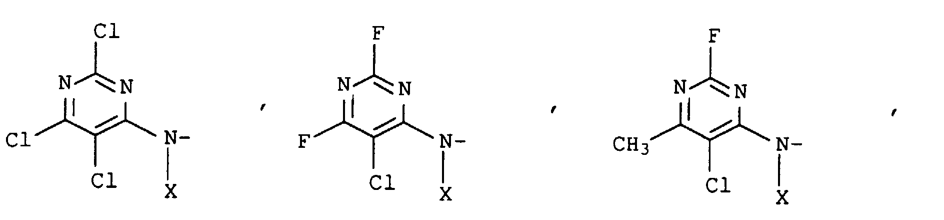 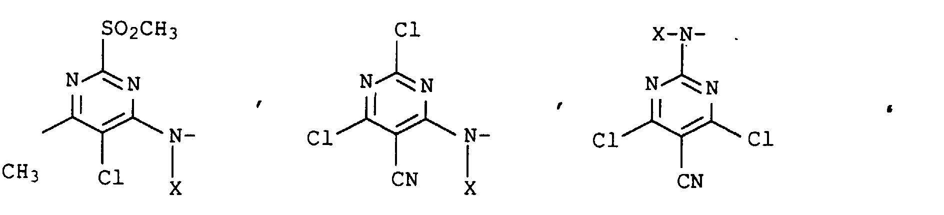 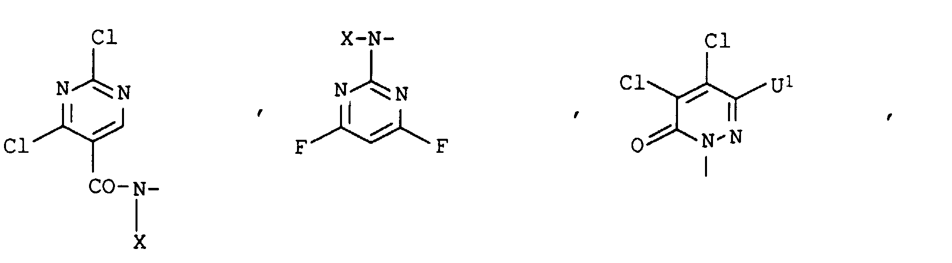 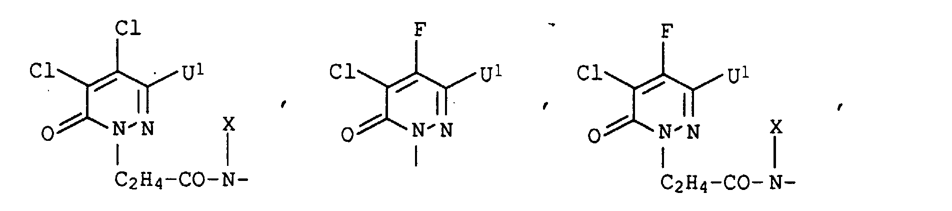 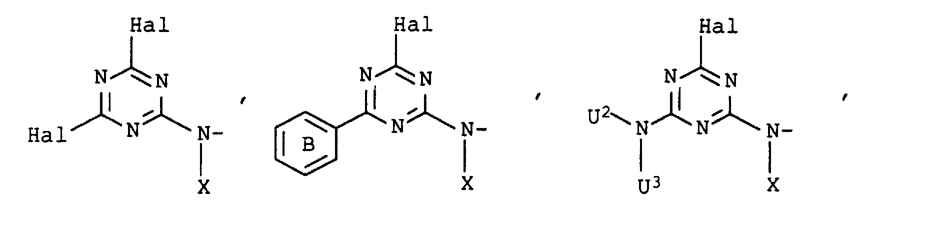 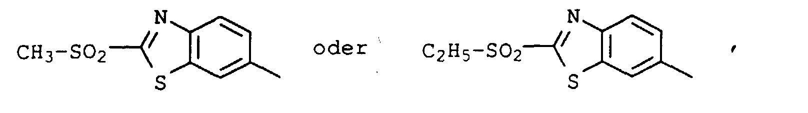 worin
- X: Wasserstoff oder C₁-C₄-Alkyl,
- Hal: Fluor oder Chlor,
- U¹: Wasserstoff oder Nitro und
- U² und U³: unabhängig voneinander jeweils Wasserstoff,
C₁-C₆-Alkyl, das gegebenenfalls durch Hydroxy, Halogen, Cyano, Hydroxysulfonyl oder einen Rest der Formel -SO₂-Y, worin Y die obengenannte Bedeutung besitzt, substituiert ist und jeweils durch 1 oder 2 Sauerstoffatome in Etherfunktion, Imino- oder C₁-C₄-Alkyliminogruppen unterbrochen sein kann, oder U² und U³ zusammen mit dem sie verbindenden Stickstoffatom, Pyrrolidinyl, Piperidinyl, Morpholinyl, Piperazinyl oder N-(C₁-C₄-Alkyl)piperazinyl oder U² auch einen Rest der Formel 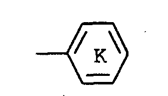 bedeuten,
wobei die Ringe B und K jeweils ein- oder zweifach durch Hydroxysulfonyl substituiert und benzoanelliert sein können und der Ring K davon unabhängig ein- oder zweifach durch Chlor, Nitro, C₁-C₄-Alkyl, C₁-C₄-Alkoxy, Cyano, Carboxyl, Acetylamino, Hydroxysulfonylmethyl oder einen Rest der Formel CH₂-SO₂-Y, SO₂-Y, NH-CO-Y oder NU²-CO-NU²-Z-SO₂-Y, worin Y und U² jeweils die obengenannte Bedeutung besitzen und Z für C₂-C₆-Alkylen, das gegebenenfalls durch Hydroxy, Chlor, Cyano, Carboxyl, C₁-C₄-Alkoxycarbonyl, C₁-C₄-Alkanoyloxy oder Sulfato substituiert ist und durch jeweils 1 oder 2 Sauerstoffatome in Etherfunktion oder Imino- oder C₁-C₄-Alkyliminogruppen unterbrochen sein kann, steht, substituiert sein kann.

Ankerreste E aus der aliphatischen Reihe sind beispielsweise Acryloyl-, Mono-, Di- oder Trichloracryloyl, Mono-, Di- oder Tribromacryloyl, -CO-CCl=CH-COOH, -CO-CH=CCl-COOH, 2-Chlorpropionyl, 1,2-Dichlorpropionyl, 1,2-Dibrompropionyl, 3-Phenylsulfonylpropionyl, 3-Methylsulfonylpropionyl, 2-Sulfatoethylaminosulfonyl, 2-Chlor-2,3,3-trifluorcyclobutylcarbonyl, 2,2,3,3-Tetrafluorcyclobutylcarbonyl, 2,2,3,3-Tetrafluorcyclobutylsulfonyl, 2-(2,2,3,3-Tetrafluorcyclobutyl)acryloyl, 1- oder 2-Alkyl- oder -Arylsulfonylacryloyl, wie 1- oder 2-Methylsulfonylacryloyl, oder ein Rest der Formel SO₂-Y, W¹-SO₂-Y, CONX-W²-SO₂-Y oder NXCONX-W²-SO₂-Y, worin X und Y jeweils die obengenannte Bedeutung besitzen, W¹ C₁-C₄-Alkylen und W² C₁-C₄-Alkylen oder gegebenenfalls substituiertes Phenylen bedeuten.

Reste W¹ und W² sind z.B. CH₂, (CH₂)₂, (CH₂)₃, (CH₂)₄, CH(CH₃) CH₂ oder CH(CH₃)CH(CH₃).

Reste W² sind weiterhin z.B. 1,2-, 1,3- oder 1,4-Phenylen.

T in Formel I stellt ein Brückenglied dar. Geeignete Brückenglieder gehorchen z.B. der Formel

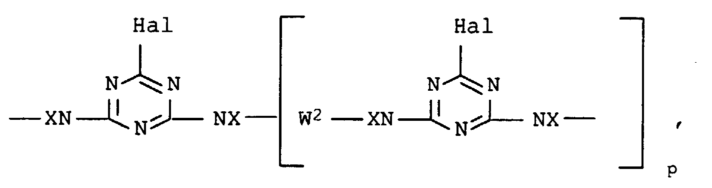

―NX―Z―NX― , ―NX―CO― NX ,

CO oder SO₂, worin p für 0 oder 1 steht und Hal, W², X und Z jeweils die obengenannte Bedeutung besitzen.

Besonders als Brückenglieder zu nennen sind Reste der Formel 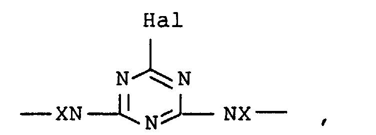 CO oder SO_{2,} wobei CO oder SO₂, hervorzuheben sind.

Wenn n 2 bedeutet, so gehorcht D vorzugsweise der Formel 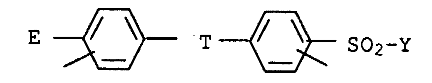 in der E, Y und T jeweils die obengenannte Bedeutung besitzen.

Weiterhin bevorzugt sind Reaktivfarbstoffe der Formel I, in der R¹ Hydroxy bedeutet.

Weiterhin bevorzugt sind Reaktivfarbstoffe der Formel I, in der R², R³ und R⁴ jeweils Wasserstoff bedeuten.

Weiterhin bevorzugt sind Reaktivfarbstoffe der Formel I, in der E für Wasserstoff, einen Ankerrest aus der 1,3,5-Triazinreihe oder einen Rest der Formel SO₂-Y, worin Y die obengenannte Bedeutung besitzt, steht.

Weiterhin bevorzugt sind Reaktivfarbstoffe der Formel I, in der, wenn n 2 ist, T für einen Rest der Formel CO oder SO₂ steht.

Weiterhin bevorzugt sind Reaktivfarbstoffe der Formel I, in der n 1 bedeutet.

Weiterhin bevorzugt sind Reaktivfarbstoffe der Formel I, in der der Ring A nicht benzoanelliert ist.

Besonders bevorzugt sind Reaktivfarbstoffe der Formel I, in der E für Wasserstoff oder einen Rest der Formel SO₂-Y, worin Y die obengenannte Bedeutung besitzt, steht.

Besonders bevorzugt sind weiterhin Reaktivfarbstoffe der Formel I, in der der Rest der Formel SO₂-Y in ortho-Position zur Azogruppe steht.

Besonders bevorzugt sind weiterhin Reaktivfarbstoffe der Formel Ia 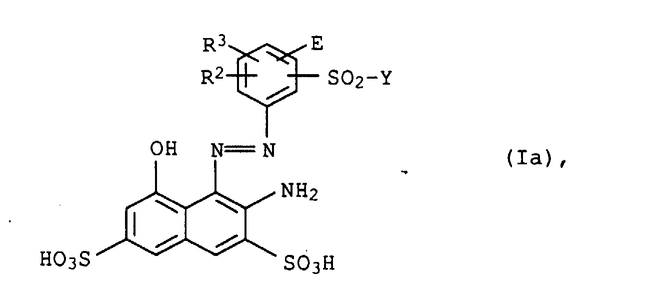 in der R² und R³ unabhängig voneinander jeweils Wasserstoff oder Hydroxysulfonyl bedeuten und E und Y jeweils die obengenannte Bedeutung besitzen.

Von besonderem Interesse sind Reaktivfarbstoffe der Formel Ia, in der E Wasserstoff oder einen Rest der Formel SO₂-Y, wobei Wasserstoff besondere Bedeutung zukommt, und R² und R³ jeweils Hydroxysulfonyl bedeuten.

Die neuen Reaktivfarbstoffe der Formel I können nach an sich bekannten Methoden erhalten werden.

Beispielsweise kann man ein Anilin der Formel IIa oder IIb 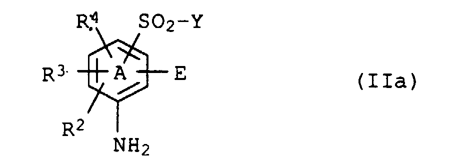 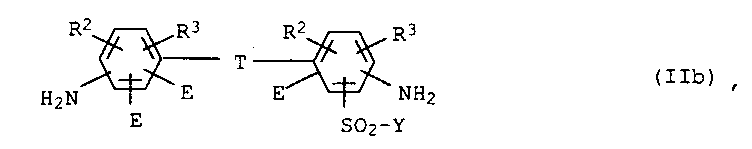 worin der Ring A, R², R³, R⁴, E, Y und T jeweils die obengenannte Bedeutung besitzen, auf an sich bekanntem Weg diazotieren oder tetrazotieren und mit einem Aminonaphthalin der Formel III 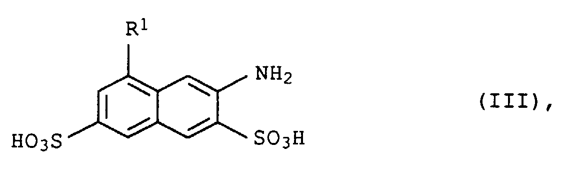 in der R¹ jeweils die obengenannte Bedeutung besitzt, kuppeln.

Die Aniline der Formel IIb können nach an sich bekannten Methoden erhalten werden, beispielsweise wie in der älteren deutschen Patentanmeldung P 195 08 311.3 beschrieben.

Die neuen Reaktivfarbstoffe der Formel I eignen sich in vorteilhafter Weise zum Färben oder Bedrucken von Hydroxygruppen oder Stickstoffatome aufweisenden organischen Substraten. Solche Substrate sind beispielsweise Leder oder Fasermaterial, das überwiegend natürliche oder synthetische Polyamide oder natürliche oder regenerierte Cellulose enthält. Vorzugsweise eignen sich die neuen Farbstoffe zum Färben und Bedrucken von Textilmaterial auf der Basis von Wolle oder insbesondere von Baumwolle. Man erhält Ausfärbungen in roten Farbtönen.

Insbesondere auf Substraten auf Basis von Cellulose werden farbstarke Färbungen mit sehr hoher Fixierausbeute erhalten, die eine sehr gute Lichtechtheit sowie vorzügliche Naßechtheiten, wie Wasch-, Chlorbleich-, Peroxidbleich-, Alkali-, Meerwasser- oder Schweißechtheit, aufweisen.

Die folgenden Beispiele sollen die Erfindung näher erläutern.

### Beispiel 1

33,1 g 3-(2-Sulfatoethylsulfonyl)anilin-4,6-disulfonsäure wurden in 100 ml Eiswasser angerührt, mit 10 ml 10 N Salzsäure versetzt und unter Rühren bei einer Temperatur von 0 bis 5°C durch Zutropfen von 15 ml 23 gew.-%iger wäßriger Natriumnitritlösung diazotiert. Nach 2 h Rühren bei 0 bis 5°C zersetzte man den geringen Überschuß an freier salpetriger Säure durch Zugabe von Amidosulfonsäure und hielt die Diazoniumsalzlösung bis zur Kupplung bei 0 bis 5°C.

16,9 g 1-Hydroxy-7-aminonaphthalin-3,6-disulfonsäure wurden in 100 ml Eiswasser angerührt. Die Diazoniumsalzlösung wurde zu dieser Lösung getropft und dabei mit Natriumacetat ein pH-Wert von 2,5 bis 3 gehalten. Nach Beendigung der Reaktion ließ man auf Raumtemperatur erwärmen und stellte dann mittels Natriumhydrogencarbonat einen pH-Wert von 4,5 bis 5 ein. Danach versetzte man die Reaktionslösung mit 50 g Natriumchlorid und ließ 4 h nachrühren. Der gebildete Niederschlag wurde abfiltriert und getrocknet. Man erhielt 24,6 g des Farbstoffs der Formel

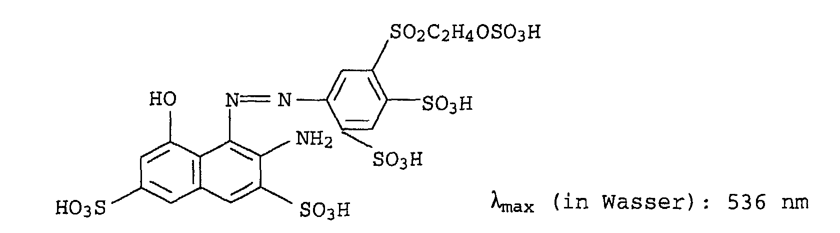

### Beispiel 2 (nicht erfindungsgemäß)

15,5 g 3-(2-Sulfatoethylsulfonyl)anilin wurden in 100 ml Eiswasser angerührt, mit 10 ml 10 N Salzsäure versetzt und unter Rühren bei einer Temperatur von 0 bis 5°C durch Zutropfen von 15 ml 23 gew.-%iger wäßriger Natriumnitritlösung diazotiert. Nach 2 h Rühren bei 0 bis 5°C zersetzte man den geringen Überschuß an freier salpetriger Säure durch Zugabe von Amidosulfonsäure und hielt die Diazoniumsalzlösung bis zur Kupplung bei 0 bis 5°C.

27,6 g 2-Aminonaphthalin-3,6-disulfonsäure wurden in 100 ml Eiswasser angerührt. Die Diazoniumsalzlösung wurde zu dieser Lösung getropft und dabei mit wäßriger Natriumcarbonatlösung ein pH-Wert von 2,5 bis 3 gehalten. Nach Beendigung der Reaktion ließ man auf Raumtemperatur erwärmen und stellte dann mittels Natriumhydrogencarbonat einen pH-Wert von 4,5 bis 5 ein. Danach versetzte man die Reaktionslösung mit 25 g Natriumchlorid und ließ 4 h nachrühren. Der gebildete Niederschlag wurde abfiltriert und getrocknet Man erhielt 24,2 g des Farbstoffs der Formel

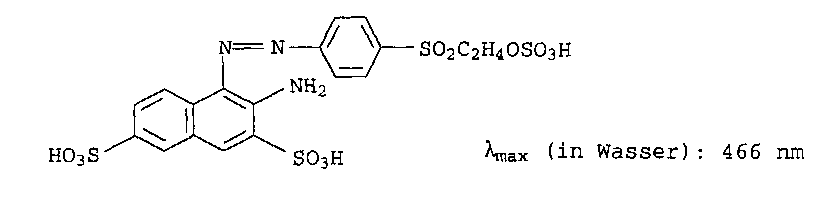

In analoger Weise wurden die in der folgenden Tabelle aufgeführten Farbstoffe erhalten.

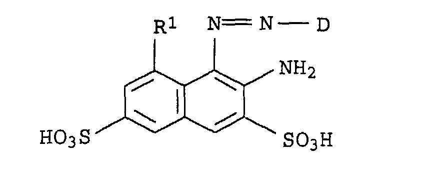

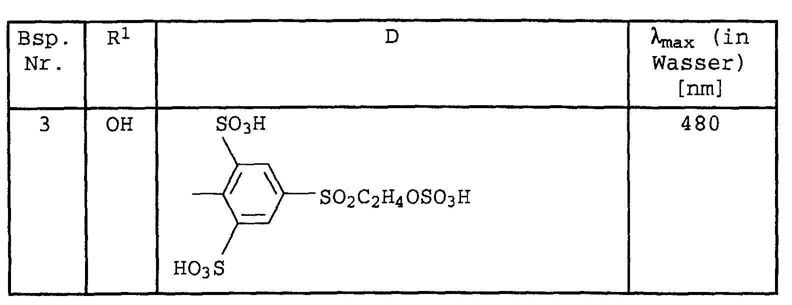

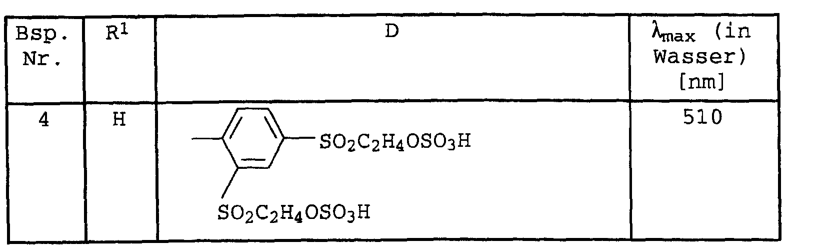

### Beispiel 5

30,2 g 3,3'-Diamino-4,4'-bis(2-sulfatoethylsulfonyl)benzophenon wurden in 200 ml Eiswasser angerührt, mit 30 ml 10 N Salzsäure und 100 ml Eisessig versetzt und unter Rühren bei einer Temperatur von 0 bis 5°C mit 31 ml 23 gew.-%iger wäßriger Natriumnitritlösung tetrazotiert. Nach 3 h Rühren bei 0 bis 5°C zersetzte man den geringen Überschuß an freier salpetriger Säure durch Zugabe von Amidosulfonsäure. 57,5 g 2-Aminonaphthalin-3,6-disulfonsäure wurden zugegeben und der pH-Wert mit Natriumcarbonat zwischen 3 bis 3,5 gehalten. Nach Beendigung der Reaktion ließ man auf Raumtemperatur erwärmen und stellte den pH-Wert mit Natriumcarbonat auf 5 bis 5,5. Die Reaktionslösung wurde mit 50 g Natriumchlorid versetzt und 4 h gerührt. Der rote Niederschlag wurde abfiltriert und getrocknet. Man erhielt den Farbstoff der Formel

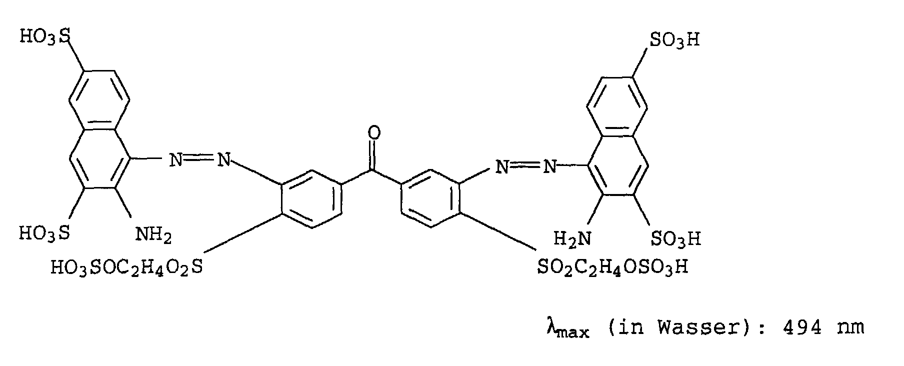

### Beispiel 6

Man verfuhr analog Beispiel 5, verwendete jedoch eine äquivalente Menge an 2-Amino-8-hydroxynaphthalin-3,6-disulfonsäure und erhielt den Farbstoff der Formel

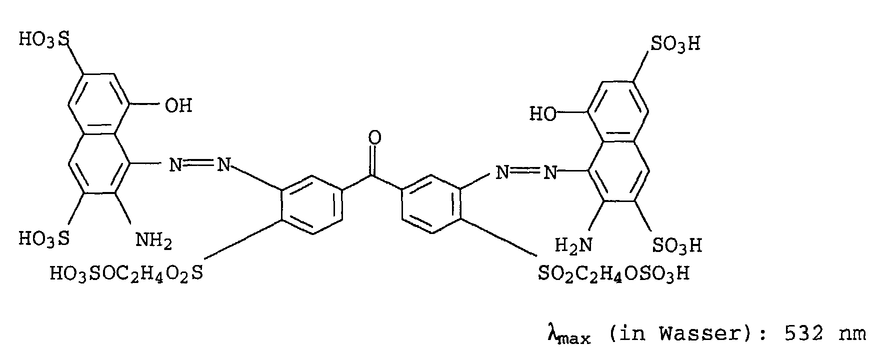

### Beispiel 7

Man verfuhr analog Beispiel 5, verwendete jedoch als Tetrazokomponente anstelle der Carbonylverbindung die entsprechende Sulfonylverbindung und als Kupplungskomponente das in Beispiel 6 genannte Naphthalinderivat. Man erhielt den Farbstoff der Formel

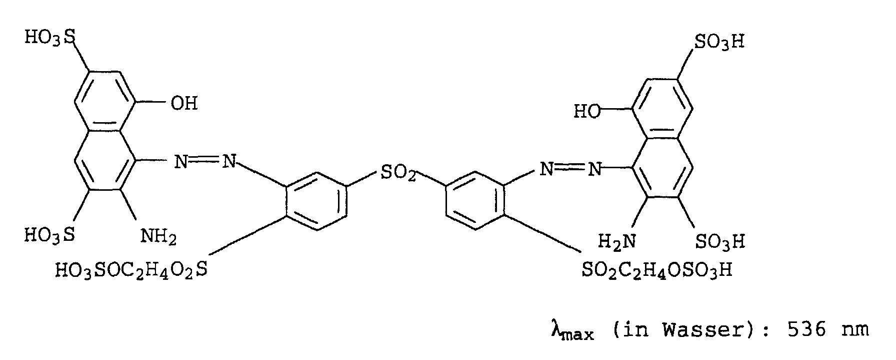

## Patentansprüche

1. Reaktivfarbstoffe der Formel I 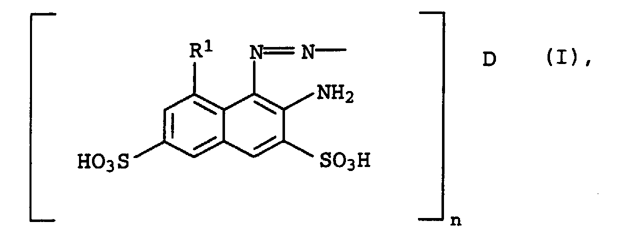 in der
n 1 oder 2,
R¹ Wasserstoff oder Hydroxy und
D ,wenn n 1 ist, einen Rest der Formel 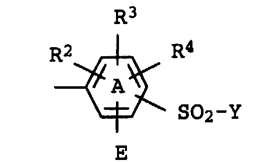 oder, wenn n 2 ist, einen Rest der Formel 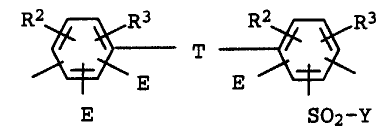 bedeuten,
worin der Ring A benzoanelliert sein kann, R², R³ und R⁴ unabhängig voneinander jeweils für Wasserstoff, Halogen oder Hydroxysulfonyl, E für Wasserstoff, einen heterocyclischen Ankerrest oder einen Ankerrest aus der aliphatischen Reihe, Y für Vinyl oder einen Rest der Formel C₂H₄-Q, wobei Q die Bedeutung einer unter alkalischen Reaktionsbedingungen abspaltbaren Gruppe besitzt, und T für ein Brückenglied stehen,
mit der Maßgabe, daß wenn n 1, R¹ Hydroxy und R², R³ und R⁴ jeweils Wasserstoff bedeuten, E weder Wasserstoff noch ein Rest der Formel SO₂-Y, W¹-SO₂-Y oder CONX-W¹-SO₂-Y ist, worin Y jeweils die obengenannte Bedeutung besitzt und W¹ jeweils für C₁-C₄-Alkylen und X für Wasserstoff oder C₁-C₄-Alkyl stehen und mit der Maßgabe, daß wenn n 1 und R¹ Wasserstoff ist, E nicht Wasserstoff bedeutet.

2. Reaktivfarbstoffe nach Anspruch 1, dadurch gekennzeichnet, daß R¹ Hydroxy bedeutet.

3. Reaktivfarbstoffe nach Anspruch 1, dadurch gekennzeichnet, daß R², R³ und R⁴ jeweils Wasserstoff bedeuten.

4. Reaktivfarbstoffe nach Anspruch 1, dadurch gekennzeichnet, daß wenn n 2 ist, T für einen Rest der Formel CO oder SO₂ steht.

5. Reaktivfarbstoffe nach Anspruch 1, dadurch gekennzeichnet, daß n 1 bedeutet.

6. Reaktivfarbstoffe nach Anspruch 1, dadurch gekennzeichnet, daß E für Wasserstoff oder einen Rest der Formel SO₂-Y, worin Y die in Anspruch 1 genannte Bedeutung besitzt, steht.

7. Reaktivfarbstoffe nach Anspruch 1, dadurch gekennzeichnet, daß der Rest der Formel SO₂-Y in ortho-Position zur Azogruppe steht.

8. Verwendung der Reaktivfarbstoffe gemäß Anspruch 1 zum Färben oder Bedrucken von Hydroxygruppen oder Stickstoffatome aufweisenden organischen Substraten.

## Claims

1. A reactive dye of the formula I 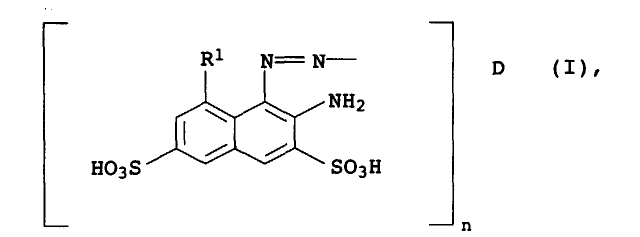 where
n is 1 or 2,
R¹ is hydrogen or hydroxyl and
D is, when n is 1, a radical of the formula 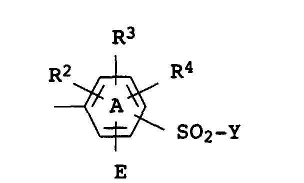 or, when n is 2, a radical of the formula 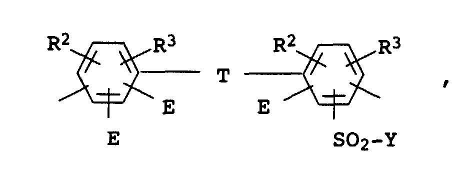 where ring A can be benzo-fused, R², R³ and R⁴ are each, independently of one another, hydrogen, halogen or hydroxysulfonyl, E is hydrogen, a heterocyclic anchor radical or an anchor radical from the aliphatic series, Y is vinyl or a radical of the formula C₂H₄-Q where Q is a group which can be eliminated under alkaline conditions, and T is a linker,
with the proviso that, when n is 1, R¹ is hydroxyl and R², R³ and R⁴ are each hydrogen, E is neither hydrogen nor a radical of the formula SO₂-Y, W¹-SO₂-Y or CONX-W¹-SO₂-Y where Y has in each case the abovementioned meaning, and W¹ is in each case C₁-C₄-alkylene and X is hydrogen or C₁-C₄-alkyl, and with the proviso that, when n is 1 and R¹ is hydrogen, E is not hydrogen.

2. A reactive dye as claimed in claim 1, wherein R¹ is hydroxyl.

3. A reactive dye as claimed in claim 1, wherein R², R³ and R⁴ are each hydrogen.

4. A reactive dye as claimed in claim 1, wherein, when n is 2, T is a radical of the formula CO or SO₂.

5. A reactive dye as claimed in claim 1, wherein n is 1.

6. A reactive dye as claimed in claim 1, wherein E is hydrogen or a radical of the formula SO₂-Y where Y has the meanings specified in claim 1.

7. A reactive dye as claimed in claim 1, wherein the radical of the formula SO₂-Y is in the position ortho to the azo group.

8. The use of a reactive dye as claimed in claim 1 for dyeing or printing organic substrates having hydroxyl groups or nitrogen atoms.

## Revendications

1. Colorants réactifs de formule I 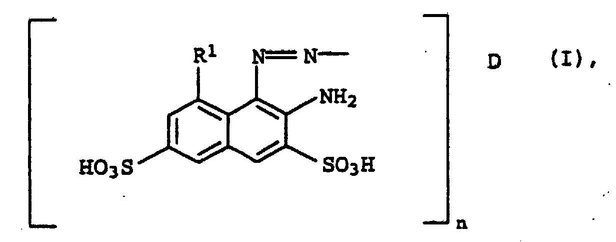 dans laquelle
n vaut 1 ou 2,
R¹ représente un atome d'hydrogène ou un groupement hydroxy et
D représente, lorsque n vaut 1, un reste de formule 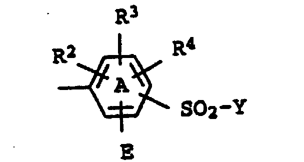 ou, lorsque n vaut 2, un reste de formule 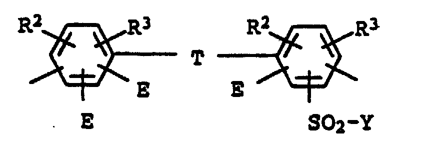 dans lesquelles le cycle A peut être benzocondensé, R², R³ et R⁴ représentent chacun indépendamment les uns des autres un atome d'hydrogène, d'halogène, ou un groupement hydroxysulfonyle, E est mis pour un atome d'hydrogène, un reste hétérocyclique d'ancrage ou un reste d'ancrage d'une série aliphatique, Y est mis pour un groupement vinyle ou un reste de formule C₂H₄-Q, où Q prend la signification d'un groupement séparable dans des conditions réactionnelles alcalines, et T est mis pour un groupement pontant,
étant spécifié que, lorsque n vaut 1, que R¹ représente un groupement hydroxy et que R², R³ et R⁴ représentent chacun un atome d'hydrogène, E ne représente ni un atome d'hydrogène ni un reste de formule SO₂-Y, W¹-SO₂-Y ou CONX-W¹-SO₂-Y, où Y prend à chaque fois la signification susmentionnée et W¹ est mis à chaque fois pour un groupement alkylène en C₁-C₄, et X pour un atome d'hydrogène ou un groupement alkyle en C₁-C₄, et étant spécifié que, lorsque n vaut 1 et que R¹ représente un atome d'hydrogène, E ne représente pas un atome d'hydrogène.

2. Colorants réactifs selon la revendication 1, caractérisé en ce que R¹ représente un groupement hydroxy.

3. Colorants réactifs selon la revendication 1, caractérisé en ce que R², R³ et R⁴ représentent chacun un atome d'hydrogène.

4. Colorants réactifs selon la revendication 1, caractérisé en ce que T représente un reste de formule CO ou SO₂, lorsque n vaut 2.

5. Colorants réactifs selon la revendication 1, caractérisé en ce que n vaut 1.

6. Colorants réactifs selon la revendication 1, caractérisé en ce que E est mis pour un atome d'hydrogène ou un reste de formule SO₂-Y, où Y prend la signification mentionnée dans la revendication 1.

7. Colorants réactifs selon la revendication 1, caractérisé en ce que le reste de formule SO₂-Y est en position ortho par rapport au groupement azoïque.

8. Utilisation de colorants réactifs selon la revendication 1 pour la teinture et l'impression de substrats organiques comportant des groupements hydroxy ou des atomes d'azote.
